Europäisches Patentamt

**European Patent Office**

**Office européen des brevets**

(11) Veröffentlichungsnummer: **0 193 922 B1**

## EUROPÄISCHE PATENTSCHRIFT

(45) Veröffentlichungstag der Patentschrift: **11.03.92**

(21) Anmeldenummer: **86102796.9**

(22) Anmeldetag: **04.03.86**

Die Akte enthält technische Angaben, die nach dem Eingang der Anmeldung eingereicht wurden und die nicht in dieser Patentschrift enthalten sind.

(51) Int. Cl.⁵: **A01N 43/84**, A01N 53/00,
//(A01N43/84,43:80,43:76,43:10, 43:08,37:46),(A01N53/00,43:84)

(54) **Fungizide und pflanzenwachstumsregulierende Mittel.**

(30) Priorität: **04.03.85 DD 273728**

(43) Veröffentlichungstag der Anmeldung:
**10.09.86 Patentblatt 86/37**

(45) Bekanntmachung des Hinweises auf die Patenterteilung:
**11.03.92 Patentblatt 92/11**

(84) Benannte Vertragsstaaten:
**AT BE CH DE FR GB IT LI NL SE**

(56) Entgegenhaltungen:
**EP-A- 0 026 873**
**FR-A- 2 516 350**

(73) Patentinhaber: **CHINOIN Gyogyszer és Vegy-**
**észeti Termékek Gyára RT.**
**To utca 1-5**
**H-1045 Budapest IV(HU)**

(72) Erfinder: **Strumpf, Thomas**
**Toni Semmler-Strasse 16**
**Potsdam(DE)**
Erfinder: **Lyr, Horst, Dr.**
**G.Herwegh Strasse 7**
**Eberswalde(DE)**
Erfinder: **Zanke, Dieter, Dr.**
**Marchwitza Ring 29**
**Potsdam-Babelsberg(DE)**
Erfinder: **Zollfrank, Gerline**
**Brüningstrasse 6**
**Potsdam(DE)**
Erfinder: **Oros, Gyula, Dr.**
**Huszár u. 5**
**HU-1074 Budapest(HU)**
Erfinder: **Virányi, Ferenc, Dr.**
**Fodor u. 58**
**HU-1124 Budapest(HU)**
Erfinder: **Ersek, Tibor, Dr.**
**Damjanich u. 44**
**HU-1174 Budapest(HU)**

(74) Vertreter: **Patentanwälte Beetz sen. - Beetz**
**jun. Timpe - Siegfried - Schmitt-Fumian**
**Steinsdorfstrasse 10**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft fungizide und pflanzenwachstumsregulierende Mittel und ihre Anwendung im Pflanzenschutz.

Alkylmorpholine werden zur Bekämpfung von Echtem Mehltau eingesetzt (DE 11 64 152, DE 11 98 125, DD 140 412, DE 26 56 747). Acylaniline haben als gegen Oomyceten wirksame Fungizide Eingang in den praktischen Pflanzenschutz gefunden (vgl. R. Wegler, Chemie der Pflanzenschutz- und Schädlingsbekämpfungsmittel, Band 6). Aufgrund des relativ engen Wirkungsspektrums aller dieser Verbindungen wurden verschiedene Vorschläge vorteilhafter Mischungen sowohl für Morpholin-Fungizide (DD 134 040, DD 104 416, DD 111 014, DD 116 384, DD 121 013, DE 26 33 874, DE 27 07 709, DE 27 18 721, DE 28 35 253, DD 157 592, DD 155 481) als auch Acylaniline (EP 26 873, DE 30 21 068, GB 2 017 496, JP 82 128 609, EP 38 570, DE 33 01 281) bekannt. Dennoch bleiben für einige Einsatzgebiete die Wirkungsstärke und das fungizide Wirkungsspektrum verbesserungswürdig.

Die Aufgabe der vorliegenden Erfindung wird in der Suche nach geeigneten Kombinationspartnern für Morpholin-Fungizide gesehen, die zu einer Steigerung dar fungiziden Aktivität führen, der Resistenzausbildung entgegenwirken und zugleich das Wachstum über einen Eingriff in den Stoffwechsel regulieren.

Die Aufgabe wird anspruchsgemäß gelöst. Die Erfindung beruht auf der Feststellung, daß Mischungen, bestehend aus einem Fungizid aus der Gruppe der Morpholine (A)

N-Tridecyl-2,6-dimethylmorpholin (Tridemorph) (1), N-Cyclododecyl-2,6-dimethylmorpholin (Dodemorph) (2), N-Alkyl($C_{12}$)-2,6-dimethylmorpholin (Aldimorph) (3), cis-4-[3-(p-tert.-Butylphenyl)-2-methylpropyl]-2,6-dimethylmorpholin (Fenpropimorph) (4)

sowie deren pflanzenphysiologisch verträglichen Salzen und Additionsverbindungen

und

einem der nachstehenden Fungizide (B)

N-(2,6-Dimethylphenyl)-N-furoyl-(2)-alaninmethylester (Furalaxyl) (5),

N-(2,6-Dimethylphenyl)-N-phenylacetyl-alaninmethylester (Benalaxyl) (7),

2-Chlor-N-(2,6-dimethylphenyl)-N-(tetrahydro-2-oxo-3-furanyl)-acetamid (Ofurace) (8),

3-Chlor-N-(tetrahydro-2-oxo-3-furanyl)-cyclopropan-carboxanilid) (Cypofuram) (9),

2-Methoxy-N-(2-oxo-1,3-oxazolidin-3-yl)-N-(2,6-dimethylphenyl)-acetamid (Oxadixyl) (10),

N-Isoxazol-5-oyl-N-(2,6-xylyl)-alaninmethylester (LAB 149 202 F) (11),

N-(2,6-Dimethylphenyl)-2-methoxy-N-(tetrahydro-2-oxo-3-furanyl)-acetamid (RE 26 745) (12),

N-(2,6-Dimethylphenyl)-2-methoxy-N-(tetrahydro-2-oxothien-3-yl)-acetamid (RE 26 940) (13),

eine verbesserte fungizide Wirksamkeit, besonders gegenüber Oomyceten, besitzen und sich zur Regulierung des Pflanzenwachstums eignem. Die durch die Wirkstoffkombination verursachten Effekte beruhen auf synergistischen Einflüssen. Vorteilhaft ist die größere praktische Anwendungsbreite der neuen Kombinationen, die z.B. eine simultane Bekämpfung Echter und Falscher Mehltaupilze ermöglicht. Bei einigen Pflanzenarten wird eine Hemmung der Internodienstreckung erreicht, die die Stabilität des Pflanzenbestandes erhöht. Weiterhin ist die Gefahr der Ausbildung von resistenten Stämmen aufgrund der unterschiedlichen Wirkungsweise beider Komponenten und der unterschiedlichen Empfindlichkeit einiger pilzlicher Entwicklungsstadien stark vermindert. Die erfindungsgemäßen Mischungen sind daher mit einem erheblichen technischen Fortschritt verbunden.

FR-A-25 16 350 beschreibt synergistische Fungizidmischungen, bei denen als eine Komponente Dodemorph, Tridemorph und Fenpropemorph genannt sind, die der Gruppe A der vorliegenden Mittel angehören. Als Zweitkomponente sind unter zahlreichen anderen Verbindungsklassen Acylalanine aufgeführt, wobei als Beispiele hierfür Furalaxyl und Ofurace erwähnt sind.

Mit den neuen Kombinationen können an Pflanzen oder Pflanzenteilen auftretende Schadpilze bekämpft werden. Aufgrund der systemischen Eigenschaften beider Komponenten werden auch neu zuwachsende Pflanzenteile vor Pilzbefall geschützt. Die Mischungen sind gegenüber phytopathogenen Pilzen folgender Gruppen wirksam: Ascomyceten (z. B. Erysiphe- und Sclerotinia-Arten), Oomyceten (vor allem Phytophthora-Peronospora- und Plasmopara-Arten) und Basidiomyceten (z. B. Rhizoctonia-Arten).

Die Kombinationen sind vorteilhaft zur Regulierung des Pflanzenwachstums bei Getreidearten, Leguminosen, bei Gemüsekulturen, wie z. B. Gurke und Tomate, Sonnenblumen und anderen Kulturpflanzen sowie bei einigen Zierpflanzen zu verwenden. In den eingesetzten Konzentrationen kommt es dabei nicht zu phytotoxischen Schäden. Die Qualität des Saatgutes wird nicht nachteilig beeinflußt. Außerdem ist der fungizide Effekt der in den Kombinationen enthaltenen Komponenten für die Ertragssicherung zusätzlich von Bedeutung.

Die Masseverhältnisse der Morpholin-Fungizide und Fungizide der zweiten Gruppe können sich in den Mischungen in den Grenzen von 20:1 bis 1:2, insbesondere von 20:1 bis 1:1, vorzugsweise von 10:1 bis 2:1, besonders vorteilhaft von 5:1 bis 3:1 bewegen.

Hinreichend bekannt ist die Herstellung der genannten Morpholine einschließlich ihrer Salze, Molekül- und Additionsverbindungen (DE 11 64 152, DE 11 73 722, DE 24 61 513, DE 11 98 125, DD 140 041, DE 26 56 747) sowie der anderen bekannten Fungizide (DE 25 13 788, DE 23 50 944, DD 142 042, US 3 933 860, DE 27 24 786, FR 2 463 132, EP 26 873, DE 28 41 824, BE 871 668).

Die erfindungsgemäßen Wirkstoffkombinationen können in die üblichen Formulierungen, wie Lösungen, Emulsionskonzentrate, Suspensionen, Pulver, Spritzpulver, Stäubemittel, Pasten, Granulate, Aerosole, Saatgutpuder usw., übegerführt werden. Dazu werden sie in bekannter Weise mit gebräuchlichen Streckmitteln, wie flüssigen Lösungsmitteln, unter Druck stehenden verflüssigten Gasen und/oder festen Trägerstoffen, gegebenenfalls unter Verwendung von grenzflächenaktiven Mitteln, gelöst bzw. dispergiert oder gemeinsam vermahlen oder nach anderen bekannten Verfahren formuliert.

Als flüssige Lösungsmittel kommen z. B. in Betracht: Mineralölfraktionen von mittlerem bis hohem Siedepunkt, z. B. Kerosin oder Dieselöl, Öle pflanzlichen oder tierischen Ursprungs, aliphatische, cyclische und aromatische Kohlenwasserstoffe, z. B. Toluol, Xylol, alkylierte Naphthaline, Cyclohexan, Paraffin oder deren Derivate, wie niedrige Alkohole, Glykole, Ester, Ketone, und halogenierte Kohlenwasserstoffe, z. B. Butanol, Ethylenglykol, Methylethylketon, Cyclohexanon, Chloroform oder Chlorbenzol, oder polare Lösungsmittel, z.B. Dimethylformamid, Dimethylsulfoxid oder N-Methylpyrrolidon.

Mit unter Druck stehenden verflüssigten Gasen sind übliche Aerosol-Treibgase gemeint, z. B. Halogenkohlenwasserstoffe, Butan, Propan und Kohlendioxid.

Als feste Trägerstoffe können natürliche Gesteinsmehle, z. B. Kaoline, Tonerden, Talkum, Quarz, Montmorillonit, Diatonmeerde, sowie synthetische Gesteinsmehle, z. B. hochdisperse Kieselsäure, Aluminiumoxid und Silikate, verwendet werden. Als Trägerstoffe für Granulate eignen sich gebrochene bzw. gemahlene natürliche Gesteine, z. B. Calcit, Marmor, Bims oder Dolomit, synthetische Granulate aus anorganischen und organischen Mehlen sowie Granulate aus organischem Material, z. B. Sägemehle, Kokosnußschalen, Maiskolben und Tabakstengel.

Unter grenzflächenaktiven Mitteln sind Emulgiermittel und/oder Dispergiermittel und/oder schaumbildende Mittel zu verstehen. Hier kommen z. B. in Betracht: Alkali-, Erdalkali- und Ammoniumsalze von Ligninsulfonsäuren, Naphthalinsulfonsäuren, Phenolsulfonsäuren, Alkylarylsulfonate, Alkylsulfate, Alkylsulfonate, Alkali- und Erdalkalisalze oder Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatierten Fettalkoholglykolethern, Kondensationsprodukte von sulfoniertem Naphthalin und Naphthalinderivaten mit Formaldehyd, Kondensationsprodukte von Naphthalin bzw. Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkohol-Ethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose.

Weiterhin können in den Formulierungen Haftmittel, wie Carboxymethylcellulose, natürliche und synthetische pulverige, körnige oder latexförmige Polymere, wie Gummiarabicum, Polyvinylalkohol oder Polyvinylacetat, verwendet werden.

Die Formulierungen enthalten im allgemeinen zwischen 1 und 95 Masse-% Wirkstoffgemisch.

Wässerige Anwendungsformen können aus Emulsionskonzentraten, Suspensionen, Spritzpulvern usw. durch Zusatz von Wasser bereitet werden. Die Herstellung von Emulsionen oder Öldispersionen erfolgt durch Lösen in einem Öl oder Lösungsmittel und Homogenisieren in Wasser mittels Netz-, Dispergier- oder Emulgiermittel.

Die Applikation erfolgt in üblicher Weise, beispielsweise durch Tauchen, Gießen, Spritzen, Sprühen oder Streuen. Die Aufwandmengen hängen vom spezifischen Anwendungszweck ab und liegen im allgemeinen zwischen 0,5 und 5,0 kg/ha bzw. 10-200 g Wirkstoffgemisch je 100 kg Saatgut. Die erfindungsgemäßen Wirkstoffkombinationen können zur Erweiterung der Einsatzbreite und Pflanzenpflege mit anderen, bekannten Fungiziden, Herbiziden, Insektiziden, Sikkantien, Wachstumsregulatoren oder Düngemitteln gemischt werden.

Ausführungsbeispiele

Beispiel 1

Zusammensetzung eines Spritzpulvers

| 18 Masse-% | Tridemorph |
|---|---|
| 7 " | LAB 149 202 F |
| 5 " | Calciumligninsulfonat |
| 5 " | Alkylphenol-Ethylenoxid-Addukt |
| 20 " | Kieselsäure |
| 45 " | Kaolin |

Beispiel 2

| 35 Masse-% | Aldimorph |
|---|---|
| 15 " | Ofurace |
| 18,5 " | Toluol |
| 18,5 " | Cyclohexanon |
| 10 " | tert.-Butanol |
| 2 " | epoxidierter Octylphenolether |
| 1 . " | Tween 20...80 |

Beispiel 3

Synergistische Wirkung von Mischungen aus Morpholin-Fungiziden (A) und Fungiziden (B) auf Phytophthora cinnamoni in vitro

Phytophthora cinnamomi wurde in Petrischalen auf einem Nährmedium auf der Basis von Erbsensaft kultiviert, das die genannten Wirkstoffe bzw. Kombinationen in den angegebenen Konzentrationen enthielt. Die Beimpfung erfolgte mit Myzelscheiben. Nach 5 Tagen Wachstum bei 21 °C wurde der Koloniendurchmesser bestimmt und die Hemmung des radialen Zuwachses in Bezug zur unbehandelten Kontrolle ermittelt. Der synergistische Effekt wurde nach COLBY berechnet.

| Wirkstoff bzw. Kombination | Konzentration (mg/l) | Wachstums-hemmung (%) | Effekt nach COLBY |
|---|---|---|---|
| Tridemorph (1) | 4 | 51 | - |
| | 0,4 | 6 | - |
| | 0,04 | 1 | - |
| Dodemorph (2) | 40 | 52 | - |
| | 4 | 12 | - |
| | 0,4 | 2 | - |
| Aldimorph (3) | 40 | 64 | - |
| | 4 | 1 | - |
| | 0,4 | 1 | - |

Fortsetzung Beispiel 3

| Wirkstoff bzw. bzw. Kombination | Konzentration (mg/l) | Wachstums-hemmung (%) | Effekt nach COLBY |
|---|---|---|---|
| Aldimorph·HCl (3a) | 40 | 81 | – |
|  | 4 | 24 | – |
|  | 0,4 | 3 | – |
| Fenpropemorph·HCl (4a) | 4 | 1 | – |
|  | 0,4 | 1 | – |
| Fenpropemorph-Metho-sulfat (4b) | 0,4 | 3 | – |
|  | 0,04 | 2 | – |
| Furalaxyl (5) | 1 | 69 | – |
|  | 0,1 | 19 | – |
|  | 0,01 | 2 | – |
| Benalaxyl (7) | 10 | 40 | – |
|  | 1 | 19 | – |
|  | 0,1 | 6 | – |
| Ofurace (8) | 10 | 56 | – |
|  | 1 | 20 | – |
|  | 0,1 | 5 | – |
| Cypofuram (9) | 10 | 68 | – |
|  | 1 | 14 | – |
|  | 0,1 | 1 | – |
| LAB 149 202 F (11) | 10 | 84 | – |
|  | 1 | 25 | – |
|  | 0,1 | 2 | – |
| RE 26745 (12) | 1 | 77 | – |
|  | 0,1 | 12 | – |
|  | 0,01 | 2 | – |
| 1 + 5 | 4 + 1 | 88 | + 3 |
|  | 0,4 + 0,1 | 49 | + 25 |
|  | 0,04 + 0,01 | 12 | + 9 |
| 1 + 11 | 4 + 1 | 77 | + 14 |
|  | 0,4 + 0,1 | 17 | + 9 |
| 2 + 7 | 40 + 10 | 97 | + 26 |
| 2 + 8 | 4 + 1 | 43 | + 15 |
|  | 0,4 + 0,1 | 28 | + 21 |
| 2 + 9 | 40 + 10 | 100 | + 15 |
| 2 + 12 | 0,4 + 0,1 | 32 | + 17 |
| 3 + 5 | 4 + 1 | 78 | + 9 |
| 3 + 8 | 4 + 1 | 34 | + 14 |
| 3 + 11 | 4 + 1 | 53 | + 27 |

Fortsetzung Beispiel 3

| Wirkstoff bzw. Kombination | Konzentration (mg/l) | | Wachstums- hemmung (%) | Effekt nach COLBY |
|---|---|---|---|---|
| 3a + 7 | 4 | + 1 | 76 | + 38 |
|  | 0,4 | + 0,1 | 17 | + 8 |
| 3a + 12 | 0,4 | + 0,1 | 21 | + 7 |
| 4a + 5 | 4 | + 1 | 73 | + 4 |
|  | 0,4 | + 0,1 | 22 | + 2 |
| 4b + 5 | 0,4 | + 0,1 | 38 | + 16 |
|  | 0,04 | + 0,01 | 15 | + 11 |

Beispiel 4

Synergistische kurative Wirkung von Mischungen aus Morpholin-Fungiziden (A) und Fungiziden (B) auf Plasmopara halstedii an Sonnenblumen.

Sonnenblumenkeimlinge (Helianthus ammus cu. GK-70) wurden mit einer Suspension von Zoosporen von Plasmopara halstedii infiziert (2,5 x $10^5$ Sporen/ml). Nach 24 Stunden wurden die Sämlinge in wässerige Lösungen verschiedener Konzentrationen nachstehender Substanzen (aus 50 EC) für 18 Stunden gestellt.

Nach 14 Tagen wurde der Prozentsatz infizierter Pflanzen bestimmt und der $ED_{50}$-Wert ermittelt. Die Signifikanz für eine synergistische Wirkung wurde als Co T.I. ausgedrückt und nach folgender Formel berechnet:

$$Co\ T.I. = \frac{\dfrac{1}{ED_{50}\ Mischung}}{\dfrac{a}{ED_{50}\ A} + \dfrac{b}{ED_{50}\ B}}$$

Darin bedeuten a und b die jeweiligen Masseanteile der Wirkstoffe A und B in der Mischung. Ein Co T.I.-Wert > 1,25 bedeutet, daß ein signifikanter Synergismus vorliegt.

| Wirkstoff bzw. Kombination | $ED_{50}$ (mg/l) | Co T.I. |
|---|---|---|
| Aldimorph (3) | 1040,0 [x] | - |
| Aldimorph·HCl (3a) | 771,0 [x] | - |
| RE 26 745 (12) | 33,0 | - |
| 3 + 12 (3 + 1) | 5,4 | 5,57 |
| 3a + 12 (3 + 1) | 16,1 | 1,82 |

[x] phytotoxisch

Beispiel 5

Synergistische Wirkung von Mischungen aus Morpholin-Fungiziden (A) und Fungiziden (B) auf das vegetative Wachstum einiger Phytophthora-Arten in vitro

Die Pilze wurden wie in Beispiel 3 beschrieben auf wirkstoffhaltigem Grünerbsenagar kultiviert. Die $ED_{50}$-Werte wurden auf der Basis der Hemmung des radialen Zuwachses im Vergleich zur unbehandelten Kontrolle ermittelt. Das Mischungsverhältnis der Morpholin-Fungizide (A) zu den Fungiziden (B) betrug in allen Fällen 4 : 1 Masseteile. Der synergistische Effekt wurde als Co T.I. entsprechend Beispiel 4 bestimmt, wobei Werte von 1,0 ± 0,25 einen additiven Effekt, solche von > 1,25 einen signifikanten synergistischen Effekt bedeuten.

| Kombination | P. cactorum $ED_{50}$ (Co. T.I.) (mg/l) | P. cambivora $ED_{50}$ (Co T.I.) (mg/l) |
|---|---|---|
| Tridemorph (1) | 24,2 | 12,4 |
| Dodemorph (2) | 47,3 | 258,0 |
| Aldimorph (3) | 32,7 | 36,2 |
| Aldimorph·HCl (3a) | 34,6 | 23,6 |
| Fenpropemorph (4) | 175,0 | 6,41 |
| Furalaxyl (5) | 0,17 | 0,05 |
| Benalaxyl (7) | 1,8 | 0,25 |
| Ofurace (8) | 0,79 | 1,12 |
| Cypofuram (9) | 5,0 | 2,8 |
| Oxadixyl (10) | 0,12 | 0,45 |
| LAB 149 202 F (11) | 0,15 | 0,08 |
| RE 26 940 (13) | 0,22 | 0,31 |
| 1 + 10 | 0,19 (0,62) | 0,10 (3,93) |
| 1 + 11 | 0,09 (1,63) | 0,73 (0,11) |
| 2 + 10 | 0.02 (5,94) | 0,09 (4,97) |
| 3 + 5 | 0,11 (1,51) | 0,07 (0,71) |
| 3 + 7 | 1,22 (1,21) | — — |
| 3 + 8 | 1,37 (0,53) | 0,75 (1,33) |
| 3 + 9 | 2,3 (1,35) | 2,4 (0,89) |
| 3a + 9 | 1,4 (2,26) | 0,91 (2,09) |
| 3a + 13 | 0,27 (0,80) | — — |
| 4 + 10 | 0,02 (5,98) | 0,22 (1,60) |

| | P. citricola | P. parasitica var. nicotianae |
|---|---|---|
| Tridemorph (1) | 3,9 | 56,7 |
| Dodemorph (2) | 36,9 | 124,3 |
| Aldimorph (3) | 32,5 | 517,6 |
| Aldimorph·HCl (3a) | 11,0 | 162,9 |
| Fenpropemorph (4) | 29,9 | 142,7 |
| Furalaxyl (5) | 0,21 | 0,21 |
| Benalaxyl (7) | 6,1 | 5,5 |

Fortsetzung Beispiel 5

| Kombination | P. citricola | P. parasitica var. nicotianae |
|---|---|---|
| Ofurace (8) | 6,84 | 14,26 |
| Cyprofuram (9) | 32,0 | 9,9 |
| Oxadixyl (10) | 0,49 | 0,13 |
| LAB 149 202 F (11) | 0,34 | 0,16 |
| RE 26 940 (13) | 1,67 | - |
| 1 + 10 | 0,32 (0,93) | 0,24 (0,54) |
| 1 + 11 | - - | - - |
| 2 + 10 | 0,15 (3,10) | 0,09 (1,44) |
| 3 + 5 | 3,11 (0,07) | 1,23 (0,17) |
| 3 + 7 | 1,58 (2,21) | 1,36 (3,88) |
| 3 + 8 | 0,85 (4,37) | 5,15 (2,49) |
| 3 + 9 | 7,4 (0,88) | 9,6 (0,96) |
| 3a + 9 | 1,69 (1,50) | 3,2 (2,69) |
| 3a + 13 | 0,78 (1,33) | - - |
| 4 + 10 | 2,62 (0,18) | 0,19 (0,68) |

Beispiel 6

Hemmung der Internodienstreckung bei Glycine max. (Sojabohne) durch Mischungen aus Morpholin-Fungiziden (A) und Fungiziden (B) (Wuchsstauchung)

Sojabohnensamen der Sorte Harosoy wurden mit den Mitteln in der angegebenen Aufwandmenge einer Schlämmbeizung unterzogen und nach einer Woche ausgesät (50 Samen je Variante). Nach drei Wochen erfolgte die Messung der Länge des Epicotyls.

| Wirkstoff bzw. Kombination | Konz. (g/100 kg Samen) | Länge der Epicotyle (mm) | Differenz zur Kontrolle (mm) | Effekt nach COLBY |
|---|---|---|---|---|
| unbehandelte Kontrolle | - | 147 | - | - |
| Tridemorph-Methosulfat | 40 | 122 | - 25 | - |
| Fenpropemorph-Methosulfat (4b) | 40 | 39 | - 108 | - |
| Benalaxyl (7) | 10 | 151 | + 4 | - |
| LAB 149 202 F (11) | 10 | 140 | - 7 | - |
| RE 26 745 (12) | 10 | 155 | + 8 | - |
| 1b + 11 | 40 + 10 | 86 | - 61 | 31 |
| 1b + 12 | 40 + 10 | 111 | - 36 | 21 |
| 4b + 7 | 40 + 10 | 32 | - 115 | 15 |
| 4b + 12 | 40 + 10 | 18 | - 129 | 38 |

Beispiel 7

Regulierung des Wachstums bei Solanum lycopersicum (Tomate) durch Mischungen aus Morpholin-Fungiziden (A) und Fungiziden (B)

Die genannten Wirkstoffe wurden einzeln und kombiniert als 25 WP formuliert, in Wasser suspendiert und in den angegebenen Konzentrationen (AS) auf Tomatenpflanzen der Sorte Harzfeuer im 4-Blattstadium tropfnaß aufgesprüht. Für jede Variante wurden 20 Pflanzen verwendet.Nach 12-tägiger Kultivierungsdauer im Gewächshaus wurde die Trockenmasse bestimmt und mit der unbehandelten Kontrolle verglichen.

| Wirkstoff bzw. Kombination | Konz. (mg/l) | Trockenmasse (g) | Zunahme der Trockenmasse (%) |
|---|---|---|---|
| unbehandelte Kontrolle | 0 | 1,36 | 100 |
| Tridemorph (1) | 0,1 | 1,48 | 109 (−) |
| Tridemorph·HCl (1a) | 0,1 | 1,56 | 115 (−) |
| Aldimorph (3) | 0,1 | 1,51 | 111 (−) |
| Aldimorph·HCl (3a) | 0,1 | 1,53 | 112 (−) |
| Fenpropemorph (4) | 0,1 | 1,53 | 112 (−) |
| Fenpropemorph·HCl (4a) | 0,1 | 1,50 | 110 (−) |
| Ofurace (8) | 0,05 | 1,33 | 98 (−) |
| Cyprofuram (9) | 0,05 | 1,32 | 97 (−) |
| LAB 149 202 F (11) | 0,05 | 1,39 | 102 (−) |
| RE 26 745 (12) | 0,03 | 1,44 | 106 (−) |
| 1 + 12 | 0,1 + 0,03 | 1,65 | 121 (+) |
| 1a + 12 | 0,1 + 0,03 | 1,58 | 116 (+) |
| 3 + 8 | 0,1 + 0,05 | 1,66 | 122 (+) |
| 3 + 9 | 0,1 + 0,05 | 1,64 | 121 (+) |
| 3 + 11 | 0,1 + 0,05 | 1,63 | 120 (+) |
| 3 + 12 | 0,1 + 0,03 | 1,66 | 122 (+) |
| 3a + 12 | 0,1 + 0,03 | 1,78 | 131 (+) |
| 4 + 12 | 0,1 + 0,03 | 1,66 | 122 (+) |
| 4a + 12 | 0,1 + 0,03 | 1,68 | 123 (+) |

(+) Differenz zur Kontrolle signifikant (Pi = 5 %)

(−) Differenz zur Kontrolle nicht signifikant (Pi = 5 %)

**Patentansprüche**

1. Fungizide und pflanzenwachstumsregulierende Mittel,
dadurch gekennzeichnet,
daß sie als Wirkstoffe eine Mischung aus
(A) einem Fungizid aus der Gruppe der Morpholine
N-Tridecyl-2,6-dimethylmorpholin (Tridemorph) (1),
N-Cyclododecyl-2,6-dimethylmorpholin (Dodemorph) (2),
N-Alkyl($C_{12}$)-2,6-dimethylmorpholin (Aldimorph) (3),
4-(3-p-tert.-Butylphenyl)-2-methylpropyl)-2,6-cis-dimethylmorpholin(Fenpropemorph) (4)

9

sowie deren pflanzenphysiologisch verträglichen Salzen und Additionsverbindungen und

(B) einem der nachstehenden Fungizide
N-(2,6-Dimethylphenyl)-N-furoyl-(2)-alaninmethylester (Furalaxyl (5),
N-(2,6-Dimethylphenyl)-N-phenylacetyl-alaninmethylester (Benalaxyl) (7),
2-Chlor-N-(2,6-dimethylphenyl)-N-(tetrahydro-2-oxo-3-furanyl)-acetamid (Ofurace) (8),
3-Chlor-N-(tetrahydro-2-oxo-3-furanyl)-cyclopropan-carboxanilid (Cyprofuram) (9),
2-Methoxy-N-(2-oxo-1,3-oxazolidin-3-yl)-N-(2,6-dimethylphenyl)-acetamid (Oxadixyl) (10),
N-Isoxazol-5-oyl-N-(2,6-xylyl)-alaninmethylester (LAB 149 202 F) (11),
N-(2,6-Dimethylphenyl)-2-methoxy-N-(tetrahydro-2-oxo-3-furanyl)-acetamid (RE 26 745) (12),
N-(2,6-Dimethylphenyl)-2-methoxy-N-(tetrahydro-2-oxo-thien-3-yl)-acetamid (RE 26 940) (13)
neben üblichen Hilfs- und Trägerstoffen enthalten.

**2.** Mittel nach Anspruch 1,
dadurch gekennzeichnet,
daß sie die Wirkstoffe A und B in einem Massenverhältnis A:B von 20:1 bis 1:2 enthalten.

**3.** Mittel nach Anspruch 1 oder 2,
dadurch gekennzeichnet,
daß sie die Wirkstoffe A und B in einem Massenverhältnis A:B von 5:1 bis 3:1 enthalten.

**Claims**

**1.** Fungicidal agents and plant growth regulating agents, characterised in that they contain as active substances a mixture of
(A) a fungicide selected from the group comprising the morpholines N-tridecyl-2,6-dimethylmorpholine (Tridemorph) (1), N-cyclododecyl-2,6-dimethylmorpholine (Dodemorph) (2), N-alkyl($C_{12}$)-2,6-dimethylmorpholine (Aldimorph) (3), 4-(3-p-tert.butylphenyl)-2-methylpropyl)-2,6-cis-dimethylmorpholine (Fenpropemorph) (4) and the salts and addition compounds thereof which are tolerated in plant physiology and
(B) one of the following fungicides N-(2,6-dimethylphenyl)-N-furoyl-(2)-alanine methyl ester (Furalaxyl) (5),
N-(2,6-dimethylphenyl)-N-phenylacetyl-alanine methyl ester (Benalaxyl) (7),
2-chloro-N-(2,6-dimethylphenyl)-N-(tetrahydro-2-oxo-3-furanyl)-acetamide (Ofurace) (8),
3-chloro-N-(tetrahydro-2-oxo-3-furanyl)-cyclopropane-carboxanilide (Cyprofuram) (9),
2-methoxy-N-(2-oxo-1,3-oxazolidin-3-yl)-N-(2,6-dimethylphenyl)-acetamide (Oxadixyl) (10),
N-isoxazol-5-oyl-N-(2,6-xylyl)-alanine methyl ester (LAB 149 202 F) (11),
N-(2,6-dimethylphenyl)-2-methoxy-N-(tetrahydro-2-oxo-3-furanyl)-acetamide (RE 26 745) (12),
N-(2,6-dimethylphenyl)-2-methoxy-N-(tetrahydro-2-oxo-thien-3-yl)-acetamide (RE 26 940) (13)
together with conventional adjuvants and carriers.

**2.** Agents according to claim 1, characterised in that they contain active substances A and B in a mass ratio A:B of 20:1 to 1:2.

**3.** Agents according to claim 1 or 2, characterised in that they contain active substances A and B in a mass ratio A:B of 5:1 to 3:1.

**Revendications**

**1.** Agents fongicides et régulant la croissance des plantes, caractérisés en ce qu'ils contiennent comme matières actives un mélange de
(A) un fongicide du groupe des morpholines:
N-tridécyl-2,6-diméthylmorpholine (Tridemorph) (1),
N-cyclododécyl-2,6-diméthylmorpholine (Dodemorph) (2),
N-alcoyl($C_{12}$)-2,6-diméthylmorpholine (Aldimorph) (3),
4-(3-p-tert.-butylphényl)-2-méthylpropyl)-2,6-cis-diméthylmorpholine (Fenpropemorph) (4),
ainsi que de leurs sels et composés d'addition compatibles pour la physiologie des plantes, et
(B) l'un des fongicides suivants:

N-(2,6-diméthylphényl)-N-furoyl-(2)-alanineméthylester (Furalaxyl) (5),
N-(2,6-diméthylphényl)-N-phénylacétyl-alanineméthylester (Benalaxyl) (7),
2-chloro-N-(2,6-diméthylphényl)-N-(tétrahydro-2-oxo-3-furanyl)-acétamide (Ofurace) (8),
3-chloro-N-(tétrahydro-2-oxo-3-furanyl)-cyclopropane-carboxanilide(Cyprofuram) (9),
2-méthoxy-N-(2-oxo-1,3-oxazolidin-3-yl)-N-(2,6-diméthylphényl)-acétamide (Oxadixyl) (10),
N-isoxazol-5-oyl-N-(2,6-xylyl)-alanineméthylester (LAB 149 202 F) (11),
N-(2,6-diméthylphényl)-2-méthoxy-N-(tétrahydro-2-oxo-3-furanyl)-acétamide (RE 26 745) (12),
N-(2,6-diméthylphényl)-2-méthoxy-N-(tétrahydro-2-oxo-thién-3-yl)-acétamide (RE 26 940) (13),
outre des additifs et supports habituels.

2.  Agents selon la revendication 1, caractérisés en ce qu'ils contiennent les matières actives A et B dans un rapport massique A:B de 20:1 à 1:2.

3.  Agents selon la revendication 1 ou 2, caractérisés en ce qu'ils contiennent les matières actives A et B dans un rapport massique A:B de 5:1 à 3:1.